# EUROPÄISCHE PATENTSCHRIFT

(11) **EP 1 200 653 B1**
(45) Veröffentlichungstag und Bekanntmachung des Hinweises auf die Patenterteilung: **30.07.2008**
(21) Anmeldenummer: 00949327.1
(22) Anmeldetag: 13.07.2000
(51) Int. Cl.: D01D 5/24

(54) **MESO- UND NANORÖHREN**
MESOTUBES AND NANOTUBES
MESOTUBES ET NANOTUBES

(30) Priorität: 29.07.1999 DE 19935388; 12.05.2000 DE 10023456
(43) Veröffentlichungstag der Anmeldung: 02.05.2002
(73) Patentinhaber: TransMIT Gesellschaft für Technologietransfer mbH, 35394 Giessen (DE)
(72) Erfinder: GREINER, Andreas, D-35287 Amöneburg (DE); WENDORFF, Joachim, H., D-64569 Nauheim (DE); AVERDUNG, Johannes, D-45894 Gelsenkirchen (DE); DRÖSCHER, Michael, D-46286 Dorsten (DE)
(74) Vertreter: Buchhold, Jürgen
(86) Internationale Anmeldenummer: PCT/EP2000/006671
(87) Internationale Veröffentlichungsnummer: WO 2001/009414

(56) Entgegenhaltungen:
- EP-A- 0 195 353
- WO-A-97/26225
- WO-A-99/18893
- DE-A- 2 823 521
- FR-A- 1 511 581
- US-A- 5 094 906
- PATENT ABSTRACTS OF JAPAN vol. 011, no. 326 (C-454), 23. Oktober 1987 (1987-10-23) & JP 62 110916 A (TORAY IND INC), 22. Mai 1987 (1987-05-22)

## Beschreibung

Die Erfindung betrifft Meso- und Nanoröhren, d. h. Röhren oder Hohlfasern mit einem Innendurchmesser im Nano- bis Mikrometer-Bereich gemäß dem Oberbegriff von Anspruch 1, sowie ein Verfahren zur Herstellung einer ersten Ausführungsform dieser Hohlfasern gemäß dem Oberbegriff von Anspruch 11 und ein weiteres Verfahren zur Herstellung einer zweiten Ausführungsform dieser Hohlfasern gemäß dem Oberbegriff von Anspruch 12.

Als Hohlfasern, Meso- oder Nanoröhren werden allgemein Röhren mit einem Innendurchmesser von unter 0.1 mm bezeichnet

Röhren oder Hohlfasern mit kleinem Innendurchmesser sind bekannt und werden Insbesondere für Trennzwecke z. B. in der medizinischen Dialyse, für die Gasseperation oder Osmose von wäßrigen Systemen, z. B. zur Wasseraufbereitung eingesetzt (s. Kirk Othmer, Encyclopedia of Chemical Technology, 4 Ed. Vol 13, S. 312-313). Das Fasermaterial besteht meist aus Polymeren, die darüber hinaus Poren, d. h. Eigenschaften von semipermeablen Membranen besitzen können. Die zu Trennzwecken verwendeten Hohlfasern weisen meist eine Oberfläche von 100 cm² pro cm³ Volumen mit einem Innendurchmesser von 75 µm bis 1 mm auf.

Eine weitere Anwendung von Hohlfasern ist die Mikroelektronik. Hier werden supraleitende, ca. 60 µm im Durchmesser betragende Fasern aus supraleitendem Material hergestellt, Indem Hohlfasern aus Polymeren mit einer Masse gefüllt werden, die nach thermischem Abbau des Polymeren supraleitende Eigenschaften besitzt (J.C. W. Cien, H. Rinsdorf et al., Adv. Mater., 2 (1990) S. 305).

Röhren mit kleinem Innendurchmesser werden in der Regel durch Extrusionsspinnverfahren hergestellt eine Reihe von Extrusionsspinnverfahren sind in Kirk-Othmer, Encyclopedia of Chemical Technology, 4. Ed. Vol. 13, S. 317-322 beschrieben.

überdies beschreibt die FR-A-1 511 5B1 ein Verfahren zur Herstellung von Hohlfasern, bei dem eine extrudierte Faser aus einem ersten abbaubaren Material, nämlich aus Polyvinylalkohol eine Beschichtung aus einem weiteren Material erhält. Hierbei handelt es sich um einen Überzug aus Zelluloseacetat. Die vom Überzug eingeschlossene Polyvinylalkohol-Faser wird anschließend in Wasser aufgelöst, wobei sich eine Hohlfaser mit einen Innendurchmesser von 5 µm bis 900 µm bildet.

Die Zusammenfassung der JP-A-62110 916 befaßt sich mit einem hohifaserähnlichen Garn, bei dem eine Faser eines ersten weniger gut abbaubaren Materials mit einem zweiten abbaubaren Material und mindestens einem weiteren Material versehen wird. Das zweite Material wird durch Herauslösen abgebaut. Jedoch wird keine vollständige Hohlfaser offenbart, denn der gebildete Hohlkörper ist an einer Längsseite offen.

Mit Hilfe von Extrusionsspinnverfahren können Hohlfasern mit einem Innendurchmesser von bis zu 2 µm hergestellt werden. Die Herstellung von Hohlfasern mit kleineren Innendurchmessern ist mit diesen Verfahren nicht möglich.

Die deutsche Patentanmeldung DE-A1-2 823 521 befaßt sich mit der Schaffung einer Wasserstoffpermeationszelle und den hierzu erforderlichen Hohlröhren. Diese besitzen eine Metall-Außenwand aus Nickel und haben einen Innendurchmesser von 1 µm bis 50 µm.

Zur Herstellung von sehr dünnen Fasern ohne Hohlraum kann die Elektrospinning Technik (Electrostatic Spinning) eingesetzt werden. Hier werden Polymerschmeizen oder Polymerlösungen in einem elektrischen Feld durch Kanülen unter einem geringen Druck extrudiert. Grundlagen dieser Technik können z. B. in EP-A1-0 005 035, EP-A2-0 095 940, US-PS-5 024 789 oder WO-A1-91/01695 nachgeschlagen werden. Mit Hilfe des Elektrospinningverfahrens können massive Fasern mit einem Durchmesser von 10-3000 nm hergestellt werden; die Herstellung von Hohlfasern ist jedoch auch mit dieser Technik nicht möglich.

Hohlfasern mit einem sehr kleinen Innendurchmesser sind bisher nur durch elektrochemische Synthese, so beschrieben in L. A. Chemozantonskli, Chem. Phys. Lett. 297, 257, (1998), durch die Methoden der Supramolekularen Chemie (S. Demoustier - Champagne et al., Europ. Polym. J. 34, 1767, (1998) oder mit selbst-organisierenden Membranen als Template (E. Evans et al. Science, Vol 273, 1996, S. 933-995) zugänglich. Carbonhohlfasern auf Basis der Fullerenchemie (Kohlenstoff-Nanoröhrchen mit ein- und mehrwandigen Strukturen aus einer einzelnen aufgerollten Graphitschicht (Schicht aus allseitig aneinander kondensierten Kohlenstoff-Sechsringen) oder konzentrisch angeordneten Graphitzylindern sind z. B. in "Fullerenes and related Structures", Ed. A. Hirsch, Springer Verlag 1999, S. 189-234 oder N. Grobert, Nachr. Chem. Tech. Lab., 47, (1999), 768-776 beschrieben.

Diese Methoden sind jedoch nur auf spezielle Materialien anwendbar und können zur Herstellung von technisch verwertbaren, d. h. mechanisch und chemisch stabilen Hohl-fasern nicht eingesetzt werden.

Für viele Anwendungen z. B. bei der Trennung von Gasen wäre es erwünscht. Hohlfasern mit kleinen Außen- und/oder Innendurchmessern einzusetzen, Insbesondere sollen diese Fasern widerstandsfähig sein.

Aufgabe der vorliegenden Erfindung war es daher, Hohlfasern aus verschiedenen auf das jeweilige Einsatzgebiet abgestimmten Materialien mit einem Innendurchmesser im nm- bis µm-Bereich bereitzustellen. Diese sollen thermisch, chemisch und mechanisch belastbar und somit technisch anwendbar sein.

Hauptmerkmale der Erfindung sind in den kennzeichnenden Teilen der Ansprüche 1, 11 und 12 angegeben. Ausgestaltungen sind Gegenstand der Ansprüche 2 bis 10 und 13 bis 28.

Bei Hohlfasern mit einem Innendurchmesser von 10 nm bis 50 µm und einer Außenwand, aufgebaut aus metallhaltigen anorganischen Verbindungen, Polymeren und/oder Metallen sieht die Erfindung vor, daß die Hohlfasern eine rauhe oder mikrostrukturierte Innenseite aufweisen und ein Verhältnis von Oberfläche zu Volumen zwischen 500 cm²/cm³ und 2.000.000 cm²/cm³ besitzen.

Diese Hohlfasern haben Innendurchmesser in den gewünschten Dimensionen. Überraschenderweise sind sie thermisch und chemisch stabil sowie präzise aus den verschiedensten Materialien wie Polymeren, Anorganika oder sogar Metallen herzustellen.

Zur Herstellung von Hohlfasern aus metallhaltigen anorganischen Verbindungen, Polymeren und/oder Metallen sieht der unabhängige Anspruch 11 ein Verfahren vor, für das selbständiger Schutz beansprucht wird. Bei ihm erhält eine Faser aus einem ersten abbaubaren Material mindestens eine Beschichtung aus mindestens einem weiteren Material. Anschließend wird das erste Material mit der Maßgabe abgebaut, daß die so erhaltene Hohlfaser einen Innendurchmesser von 10 nm bis 50 µm aufweist. Erfindungsgemäß zeichnet sich dieses Verfahren dadurch aus, daß die Faser aus dem ersten Material nach der Elektrospinning-Technik hergestellt wird und zwar durch Verarbeitung einer Polymerlösung mit einem leicht verdampfbaren Lösungsmittel. Außerdem besitzt die gebildete Hohlfaser ein Verhältnis von Oberfläche zu Volumen zwischen 500 cm²/cm³ und 2.000.000 cm²/cm³ und weist eine raue oder mikrostrukturierte Innenseite auf.

Man erkennt, daß durch dieses Verfahren Hohlfasern mit einem Durchmesser bis hinab zu sehr kleinen Nanometerabständen geschaffen werden können. Dabei ist in der Regel der spätere Hohlraum der Hohlfasern ungefähr gleich groß wie der Durchmesser der abbaubaren Fasern, bzw. Beschichtungen. Die verfahrensgemäßen Fasern zeigen eine erstaunlich gute thermische Stabilität, die weit über 100 °C liegt Zudem erlaubt es die Elektrospinning-Technik, Multikomponentenfasern, d. h. Fasern mit unterschiedlichen Materialien in unterschiedlichen Schichten oder Fasern mit bestimmter Oberflächentopographie herzustellen.

Darüber hinaus läßt sich eine andere Ausführungsform der erfindungsgemäßen aus metallhaltigen anorganischen Verbindungen, Polymeren und/oder Metallen aufgebauten Hohlfasern durch ein weiteres Verfahren gemäß Anspruch 12 herstellen. Dieses beansprucht ebenfalls selbständige Schutz und bestimmt, daß eine Faser eines ersten Materials nacheinander mit einem zweiten abbaubaren Material und mindestens einem weiteren Material beschichtet wird. Danach wird das zweite Material abgebaut, wobei bezogen auf das mindestens eine weitere Material eine Hohlfaser mit einem innendurchmesser von 10 nm bis 50 µm und einem Kern aus dem ersten Material erhalten wird. Erfindungsgemäß stellt man die nicht abbaubare Faser aus dem ersten Material nach der Elektrospinning-Technik durch Verarbeitung einer Polymerlösung mit einem leicht verdampfbaren Lösungsmittel her. Die gebildete Hohlfaser besitzt ein Verhältnis von Oberfläche zu Volumen zwischen 500 cm²/cm³ und 2.000.000 cm²/cm³ und weist eine raue oder mikrostrukturierte Innenseite auf.

Ein derartiges Verfahren macht ebenfalls Hohlfasern mit sehr kleinem Durchmesser zugänglich. Jedoch zeichnen sich diese durch eine zusätzlich darin vorhandene Kernfaser bzw. einen Kern aus, der bevorzugt einen mittleren Abstand von 10 bis 300 nm zur Außenwand aufweist.

Die erfindungsgemäßen Hohlfasern weisen bevorzugt Innendurchmesser von 50 nm bis 20 µm, besonders bevorzugt 100 nm bis 5 µm, ganz besonders bevorzugt 100 nm bis 2 µm, bzw. 100 nm bis 1 µm, 500 nm bis 1 µm, 10 nm bis 1 µm oder 100 nm bis 500 nm auf.

Die Länge der Hohlfasern ist vom Verwendungszweck bestimmt und beträgt in der Regel 50 µm bis zu mehreren mm oder cm.

Die Wandstärke, d. h. die Dicke der Außenwände der Hohlfasern ist variabel und beträgt in der Regel 10 bis 5000 nm, bevorzugt 10 bis 1000 nm, besonders bevorzugt 10 bis 250 nm.

Hohlfasern gemäß der vorliegenden Erfindung weisen neben den sehr kleinen Innendurchmessern eine Reihe von Eigenschaften auf, die sie für eine Verwendung in den Bereichen Medizin, Elektronik, Katalyse, chemische Analytik, Gasseparation, Osmose oder der Optik geeignet machen.

Sie können gegebenenfalls eine poröse Oberfläche aufweisen und/oder wahlweise elektrische Leiter oder Isolatoren sein

Ferner können die Außenwände der erfindungsgemäßen Hohlfasern aus den unterschiedlichsten Materialien aufgebaut sein, wie zu Beispiel aus Polymeren, Metallen oder metallhaltigen anorganischen Verbindungen. Die Außenwände können eine Schicht dieser Materialien aufweisen, d. h. vollständig aus diesen bestehen oder mehrere Schichten aus den gleichen oder unterschiedlichen Materialien besitzen. Der sehr kleine Innendurchmesser sorgt für ein sehr hohes Verhältnis von Oberfläche zum Volumen der Hohlfasern; dieses kann zwischen 500 und 2.000.000 cm²/cm³, bevorzugt 5.000 bis 1.000.000 cm²/cm³, besonders bevorzugt 5.000 bis 500.000 cm²/cm³ betragen.

Die metallhaltigen, anorganischen Verbindungen der erfindungsgemäßen Hohlfasern sind z.B. Fluorierte Ethylene oder Therephthalate.

Die Beschichtung, d. h. der Aufbau der Außenwand der Hohlfasern kann aus Metallen der Gruppen Ia, Ib, IIa, IIb, IIIa, IIIb, IVa, IVb, Vb, VIb, VIIb und/oder VIIIb des Periodensystems jeweils als Reinmetall oder Legierung bestehen. Geeignete Metalle sind beispielsweise Gold, Palladium, Aluminium, Platin, Silber, Titan, Kobalt, Ruthenium, Rhodium, Natrium, Kalium, Calzium, Lithium, Vanadium, Nickel, Wolfram, Chrom, Mangan und/oder Silicium. Die Beschichtung kann durch Bedampfen mit den Metallen oder durch Zersetzung geeigneter metallorganischer Verbindungen mit CVD-Verfahren erfolgen.

Polymere Beschichtungsmaterialien können weiterhin funktionelle Gruppen wie Ester, Amide, Amine, Silylgruppen, Siloxangruppen, Thiole, Hydroxylgruppen, Urethangruppen, Carbamatgruppen, Nitrilgruppen, C=C-Gruppen, C=C-Gruppen, Carbonsäurehalogenidgruppen, Sulfoxidgruppen, Sulfongruppen, Pyridylgruppen, Arylphosphingruppen oder auch ionische Gruppen wie Carbonsäuren, Sulfonsäuren oder quartäre Amine tragen Die funktionellen Gruppen können an der Innen- und/oder Außenseite der Hohlfasern angebracht sein und die Oberflächeneigenschaften der Hohlfasern bei Trenn- oder Osmoseverfahren verbessern. Die funktionellen Gruppen können auch nachträglich durch polymeranaloge Umsetzungen chemisch verändert werden (z. B. Verseifen von Estern).

Durch eine entsprechende Funktionalisierung können auch Wirkstoffe wie Antibiotika, Anästhetika, Proteine wie Insulin, Antifouling Agentien, Agrochemikalien wie Herbizide oder Fungizide reversibel in den Hohlfasern fixiert und/oder langsam mit konstanter Konzentration wieder abgegeben (Controlled bzw. Slow-Release) werden.

Die Außenwand der Hohlfasern, d. h. das nicht-abbaubare weitere Material kann auch aus Glas, Glaskeramiken, SiOₓ, Perowskit, Keramiken, Aluminiumoxiden oder Zirkoniumoxiden, optional aus Siliziumkarbid, Bornitrid, Kohlenstoff sowie Metalloxiden aufgebaut sein. Hier bieten sich ebenfalls Gasphasenabscheideverfahren (CVD oder PVD) oder auch Hydrothermalverfahren an.

Geeignet sind Perowskite der allgemeinen Formel

LaXYMgO

Der Abbau des abbaubaren Materials kann thermisch, chemisch, strahleninduziert, biologisch, photochemisch, durch Plasma, Ultraschall, Hydrolyse oder durch Extraktion mit einem Lösungsmittel erfolgen. In der Praxis hat sich der thermische Abbau bewährt. Die Zersetzungsbedingungen liegen je nach Material bei 100-500 °C und 0.001 mbar bis 1 bar, besonders bevorzugt bei 0.001 bis 0.1 mbar. Durch den Abbau des Materials wird eine Hohlfaser erhalten, deren Wandmaterial aus den Beschichtungsmaterialien besteht.

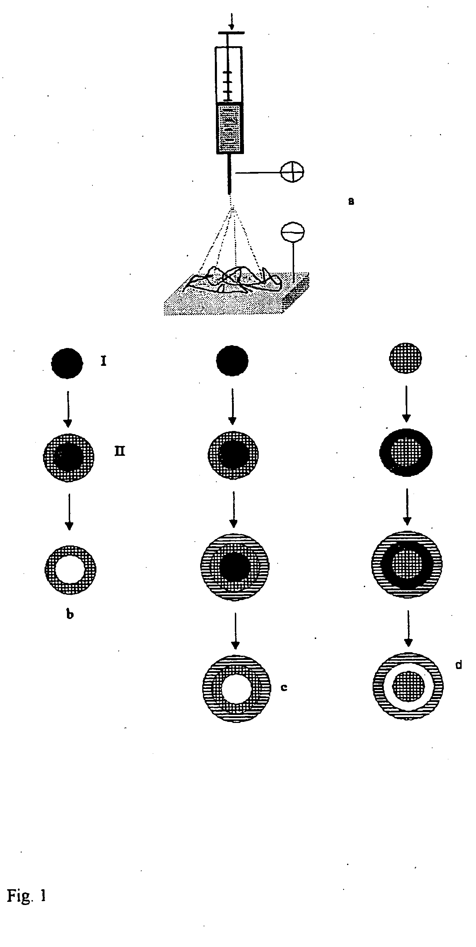

Wie in Fig. 1 b, c und d gezeigt, können auch mehrere Schichten aus verschiedenen Materialien auf die Faser aufgebracht werden. Es werden so Hohlfasern erhalten, die unterschiedliche Innen- und Außenwände aufweisen bzw die Außenwände der Hohlfasern können aus mehreren Schichten aufgebaut werden. Die unterschiedlichen Schichten können unterschiedliche Funktionen erfüllen; so kann die innere Schicht besondere Trenneigenschaften für z. B. chromatographische Zwecke und die äußere Schicht eine hohe mechanische Stabilität aufweisen.

Beispielhaft seien die folgenden Schichtabfolgen der erfindungsgemäßen Hohlfasern genannt:
Glas / Metall
Metall / Glas
Glas / Polymer
Polymer / Glas
Polymer / Polymer
Metall / Metall
Metallhaltige anorganische Verbindung / Metallhaltige anorganische Verbindung
Keramik / Keramik
Polymer / Metall
Metall / Polymer
Keramik / Polymer
Polymer / Keramik
Metall / Keramik
Keramik / Metall
Polymer / Metall / Polymer
Metall / Polymer / Metall
Metall / Keramik / Metall
Polymer / Keramik / Polymer
Keramik / Polymer / Keramik
Polymer / Glas/Polymer
Glas / Polymer / Glas

Erfindungsgemäße Hohlfasern mit oder ohne Kern können insbesondere als Separations- oder Speichermedium für Gase, Flüssigkeiten oder Partikelsuspensionen und zur Filtration oder Reinigung von Stoffgemischen verwendet werden. Hier bietet sich der Einsatz als Membrane für Gase, insbesondere H₂ oder Flüssigkeiten, zur Partikelfiltration, in der Chromatographie, zur Öl-/Wassertrennung, als Ionenaustauscher in der Dialyse, zur Größenseparation von Zellen, Bakterien oder Viren, als Bestandteil einer künstlichen Lunge, zur Entsalzung zur Ent- oder Bewässerung oder als Filter zur Entwässerung von Treibstoffen an.

Weiterhin können erfindungsgemäße Hohlfasern in der Sensorik für Lösungsmittel-, Gas-, Feuchte- oder Biosensoren, in der Kapillarelektrophorese, in katalytischen Systemen, in der Rastersondenmikroskopie oder als Werkstoffe in der Superleichtbauweise, als mechanische Verstärkung analog zu Glasfasern, als Schall- oder Schwingungsschutz als Verbundwerkstoff oder Füllstoff, als Controlled-Release- oder Drug-Delivery-System, in medizinischen Separationstechniken, in der Dialyse, als künstliche Lunge, Proteinspeicher oder im Tissue Engineering verwendet werden.

In der Bekleidunas-/Textilindustrie können die erfindungsgemäßen Hohlfasern als Wärmeisolator in Kleidung oder Schlafsäcken, in photo- oder thermochromer Bekleidung durch Einbetten von Farbstoffen im Röhreninnern oder als Kennzeichner durch Marker im Röhreninneren verwendet werden.

Außerdem finden erfindungsgemäße Hohlfasern in der Elektronik, Optik oder der Energiegewinnung Verwendung So können aus den Hohlfasern Drähte, Kabel oder Kapazitäten, Mikromaschinen (z. B. für piezoelektrische Verformung, Nanoperistaltikpumpen oder zur Verformung von photoadressierbaren Polymeren) oder Interlayer Dielektrika, hergestellt werden. Weitere Verwendungen für erfindungsgemäße Hohlfasern sind Mikroreaktoren z. B. für katalytische Reaktionen, Templatereaktionen und Bioreaktoren, die Wärmeerzeugung durch Umwandlung von Sonnenlicht (Solar-α-Systeme), in der Chiptechnologie als flexible Devices oder Mikroskopie als Sensorbestandteil (z. B. als Spitzen oder Sonden für Rastersondenmikroskope oder SNOM-Geräte).

Die erfindungsgemäßen Hohlfasern weisen eine sehr niedrige Dielektrizitätskonstante auf und können daher auch als Dielektrikum, insbesondere als Interlayer-Dielektrikum in elektronischen Bauteilen, z. B. bei der Chipherstellung verwendet werden. Bei der Produktion neuer Chip-Generationen mit noch kleineren Dimensionen bzw höheren Speicherdichten sind Interlayer-Dielektrika mit einer niedrigen Dielektrizitätskonstante wichtig. Die erfindungsgemäßen Hohlfasern weisen aufgrund des hohen Anteils an umschlossener Luft pro Volumen einen DK-Wert von kleiner als 4, bevorzugt kleiner 3, ganz besonders bevorzugt kleiner 2 und im Idealfall kleiner 1.5 auf

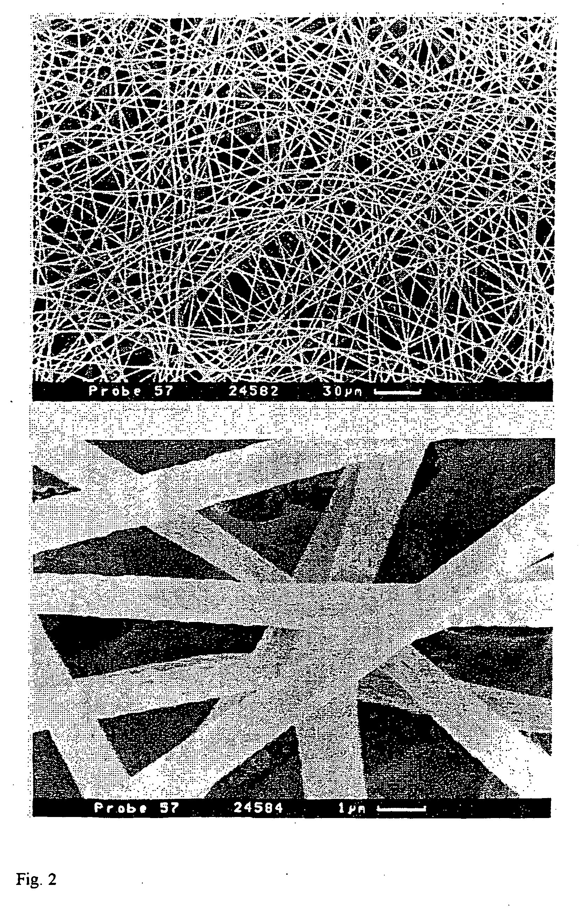

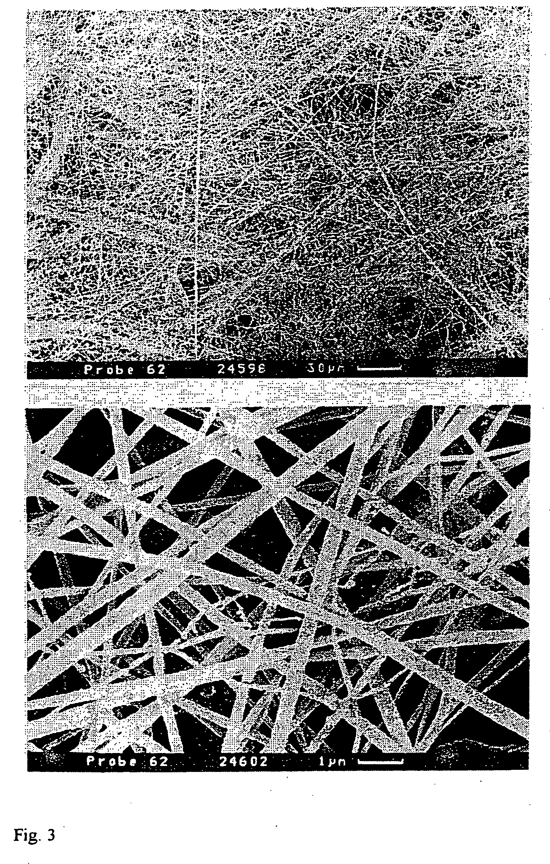

Die Hohlfasern werden für die Verwendung als Dielektrikum bevorzugt als Flies oder Matte (z. B. nach Fig. 2 oder 3) eingesetzt.

Durch die große Oberfläche der erfindungsgemäßen Hohlfasern können diese auch in Brennstoffzellen, Batterien oder in elektrochemischen Reaktionen verwendet werden Vorteilhaft besteht die Außenwand der Hohlfasern für solche Verwendungen aus Sauerstoffionenleiltern wie z. B. Perowskiten. Bei Oxidationsreaktionen können die Hohlfasern vom Edukt (z. B. einem Olefin) umspült werden, während durch die Hohlräume der Fasern Sauerstoff geleitet wird. Das Oxidationsprodukt wird außen an den Hohlfasern gebildet und abgeführt

Die erfindungsgemäßen Hohlfasern können als katalytisches System verwendet werden. So können beispielsweise Hohlfasern aus Edelmetallen wie Platin oder Palladium als Entstickungskatalysatoren in Kraftfahrzeugen eingesetzt werden.

Erfindungsgemäße Hohlfasern aus zellverträglichen Materialien oder mit entsprechend modifizierten Oberflächen können in Zellmembranen eingebunden oder eingeführt werden und für die Separation sowie Gewinnung oder Entnahme von Stoffwechselmetaboliten, Enzymen und anderen Komponenten des Zytoplasmas innerhalb von Zellen oder zytoplasmatischen Komponenten verwendet und damit für die Gewinnung von Biopharmaka eingesetzt werden. Die folgenden Beispiele sollen die Erfindung näher erläutern, ohne ihren Umfang zu beschränken.

### Beispiel 1

### Herstellung von Polylactid-Templatfasern durch Electrospinning ohne Zusatz

Eine 5% ige Lösung von Poly-L-lactid in Dichlormethan (Leitfähigkeit < 10⁻⁷ µS/cm) wurde in der in Abb. 1 gezeigten Electrospinnapparatur bei einer Spannung von 35 kV versponnen. Der Abstand der Kanülenspitze (Durchmesser 0.3 mm) von der Substratplatte (Glas) betrug 10 cm. Die Fasern wurde ohne weitere Behandlung weiterverwendet. Eine rasterelektronenmikroskopische Aufnahme der Fasern ist in Fig. 2 gezeigt.

### Beispiel 2

### Herstellung von Polylactid-Templatfasern durch Electrospinning mit Zusatz

Eine 5% ige Lösung von Poly-L-lactid mit 1.5% Benzyltriethylammoniumchlorid in Dichlormethan (Leitfähigkeit = 417 µS/cm) wurde in der in Abb. 1 gezeigten Electrospinnapparatur bei einer Spannung von 35 kV versponnen. Der Abstand der Kanülenspitze (Durchmesser 0.3 mm) von der Substratplatte (Glas) betrug 10 cm. Die Fasern wurde ohne weitere Behandlung weiterverwendet. Eine rasterelektronenmikroskopische Aufnahme der Fasern ist in Fig. 3 gezeigt.

### Beispiel 3

### Herstellung von Poly(p-xylylen)-Hohlfasern durch Beschichtung aus der Gasphase

Polylactid-Templatfasern, hergestellt durch Electrospinning gemäß Beispiel 1 wurden in dem Probenraum der in Abb 4 gezeigten Gasphasenabscheidungsapparatur plaziert. Anschließend wurden 230 mg analysenreines [2.2]Paracyclophan bei 220°C/0.1 mbar verdampft und bei 800°C pyrolysiert wodurch sich im Probenraum bei ca 20°C Poly(p-xylylen) (PPX) bildete. Das Poly(p-xylylen)/Polylactid Compositgewebe wurde in einem Vakuumofen bei 275°C/0.01 bar 8 Stunden thermisch behandelt. Der Abbau der Polylactid-Templatfasern konnte durch Infrarotspektroskopie belegt werden (Abb. 5). Die Bildung von Poly(p-xylylen)-Hohlfasern mit einem Innendurchmessern von ca 2 µm - 0.1 µm konnte durch Rasterelektronen-mikroskopie belegt werden (Fig. 7, 8).

Auf diese Weise hergestellte Poly-(p-xylylen)-Hohlfasern besitzen eine Dichte von 0.15 g/cm³ bei einem DK-Wert von 1.29 (Luft = 1). Ein Flies aus solchen Fasern besteht zu ca. 14 Vol.-% aus Poly-(p-xylylen) und 86 Vol.-% Luft.

### Beispiel 4

### Herstellung von Polyimid-Hohlfasern durch Beschichtung aus der der Lösung

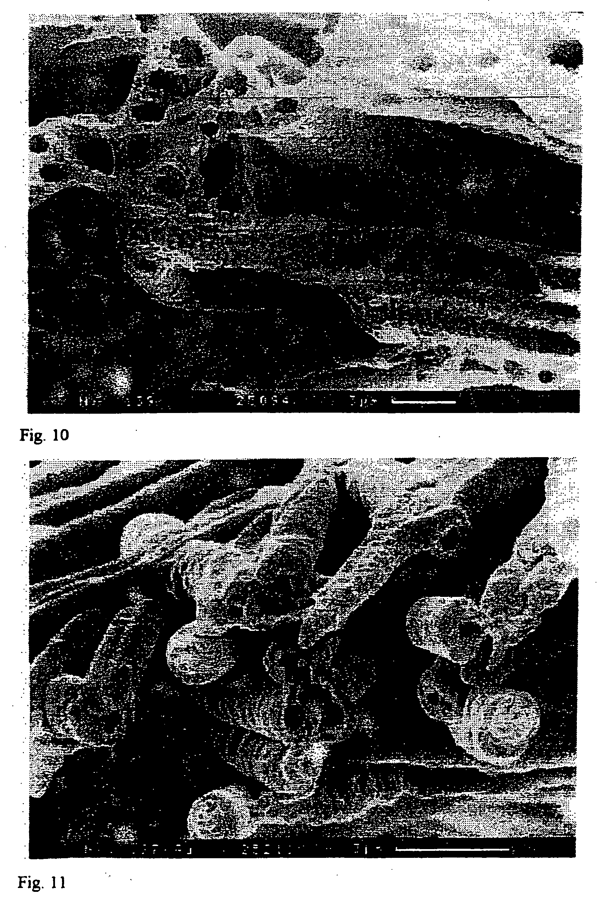

Polylactid-Templatfasern hergestellt durch Electrospinning gemäß Beispiel 1 wurden mit einer 4%igen Polyamidocarbonsäure in Wasser/DMF/Pyridin durch Eintauchen beschichtet. Das Polyamidocarbonsäure/Polylactid Compositgewebe wurde in einem Vakuumofen bei 150-285 °C/0.01 mbar 9 Stunden thermisch behandelt. Dabei wurde einerseits die Polylactid-Templatfasern thermisch abgebaut und die Polyamidocarbonsäure in Polyimid überführt Die Bildung von Polyimid-Hohlfasern mit Innendurchmessern von ca 1 µm - 0.5 µm konnte durch Rasterelektronenmikroskopie belegt werden (Fig. 10).

### Beispiel 5

### Herstellung von Poly(p-xylylen)/Gold-Hohlfasern durch Beschichtung aus der Gasphase

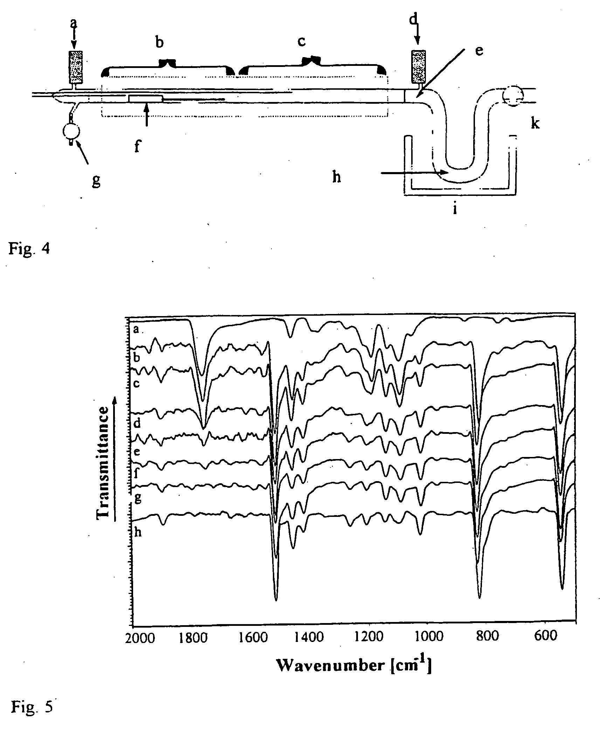

Polylactid-Templatfasern hergestellt durch Electrospinning (mit 0.8 % Benzyltriethylammoniumchlorid als Zusatz in Dichlormethan) gemäß Beispiel 2 wurden in einer Bedampfungsapparatur mit Gold aus der Gasphase beschichtet. Anschließend wurden diese Polylactid/Gold-Fasern in dem Probenraum der in Fig. 4 gezeigten Gasphasenabscheidungs-apparatur plaziert. Anschließend wurden 200 mg analysenreines [2.2]Paracyclophan bei 220 °C/0.1 mbar verdampft und bei 700 °C pyrolysiert, wodurch sich im Probenraum bei ca 20°C Poly(p-xylylen) bildete. Das Poly(p-xylylen)/Polylactid Compositgewebe wurde in einem Vakuumofen bei 285°C/0.01 mbar 8 Stunden thermisch behandelt. Die Bildung von Poly(p-xylylen)/Gold-Hohlfasern mit einem mittleren Innendurchmesser von ca 0.3 µm konnte durch Rasterelektronenmikroskopie belegt werden (Fig. 11). Das Vorhandensein der Goldbeschichtung an der Innenwand der Poly(p-xylylen)-Hohlfasern wurde durch elementspezifische Rasterelektronenmikroskopie nachgewiesen werden.

### Beispiel 6

### Herstellung von Aluminium-Hohlfasern durch Beschichtung aus der Gasphase

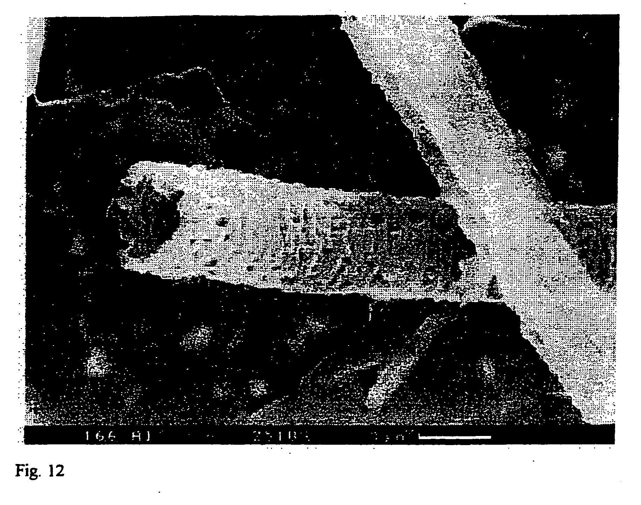

Polylactid-Templatfasern hergestellt durch Electrospinning (mit 0,8 % Benzyltriethylammoniumchlorid als Zusatz in Dichlormethan) gemäß Beispiel 2 wurden in einer Bedampfungsapparatur mit Aluminium aus der Gasphase beschichtet. Anschließend wurden diese Polylactid/Aluminium-Fasern in einem Vakuumofen bei 285 °C/0.01 mbar 8 Stunden thermisch behandelt. Die Bildung von Aluminium-Hohlfasern mit einem mittleren Innendurchmesser von ca 0.5 µm konnte durch Rasterelektronenmikroskopie belegt werden (Fig. 12). Das Vorhandensein von Aluminium wurde durch elementspezifische Rasterelektronenmikroskopie nachgewiesen.

### Beispiel 7

### Herstellung von Glas-Hohlfasern durch Beschichtung aus der Gasphase

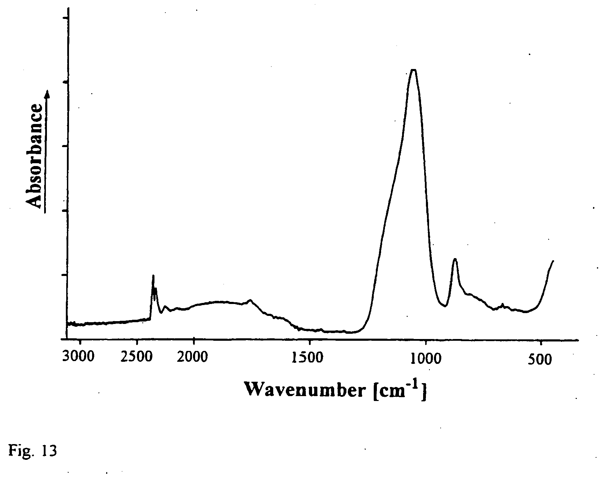

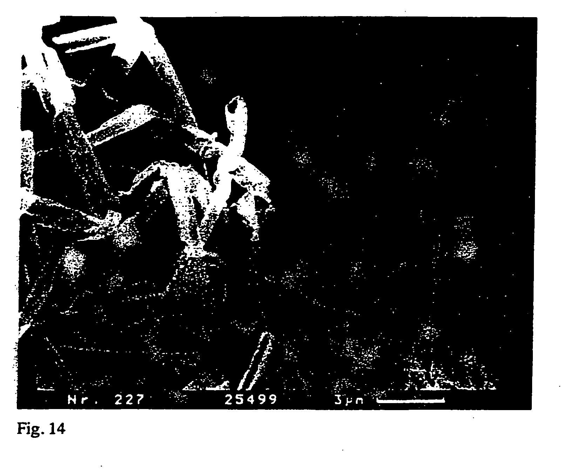

Polylactid-Templatfasern, hergestellt durch Electrospinning gemäß Beispiel 2 (mit 0.8 % Benzyltriethylammoniumchlorid als Zusatz in Dichlormethan) wurden in einer Bedampfungsapparatur mit Siliciummonoxid aus der Gasphase beschichtet und durch Sauerstoff in Siliciumdioxid (Glas, nachgewiesen durch Infrarot- und Wide Angle X-Ray Spektroskopie (WAXS)) überführt, Anschließend wurden diese Polylactid/Glas-Fasern in einem Vakuumofen bei 285 °C/0.01 bar 14 Stunden thermisch behandelt. Mittels IR-Spektroskopie konnte nachgewiesen werden, daß der thermische Abbau der Polylactid-Templatfasern quantitativ ist (Abb. 13). Die Bildung von Glas-Hohlfasern mit einem mittleren Innendurchmesser von ca 0.5 µm wurde durch Rastereleklronenmikroskopie belegt (Fig. 14).

### Legende zu den Abbildungen:

Fig. 1. Schematische Darstellung einer Electrospinnapparatur
Fig. 2. Polylactid-Templatfasern hergestellt durch Electrospinning aus Dichlormethan ohne Zusatz (Beispiel 1)
Fig. 3. Polylactid-Templatfasern hergestellt durch Electrospinning aus Dichlormethan mit Zusatz (Beispiel 2)
Fig. 4. Schematische Darstellung einer Gasphasenabscheidungsapparatur für Poly(p-xylylen), mit a) Druckmessung, b) Verdampfungszone, c) Pyrolysezone, d) Druckmessung, e) Probenraum, f) Quarzschiffchen für Startmaterial, g) Rezipient zur Druckregulierung, h) Pyrolyseöle, i) Kühlfalle, k) Vakuum
Fig. 5. Infrarotspektroskopische Untersuchung des thermischen Abbaus von Poly(p-xylylen)-beschichteten Polylactid-Templatfasern bei 265°C/0.01 bar und verschiedenen Zeiten b = 0 Std., c = 1 Std, d = 2 Std, e = 3 Std, f = 4 Std, g = 6 Std und der reinen Polymere Polylactid = a und Poly(p-xylylen) = h.

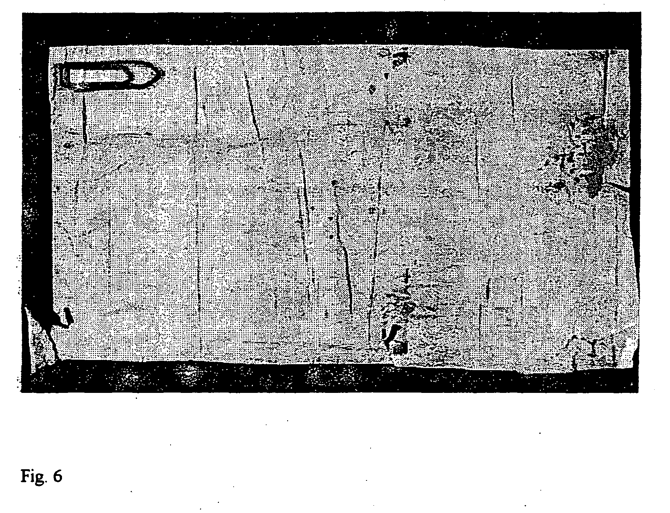

Fig. 6. Photographie eines Poly(p-xylylen)-Hohlfasergewebes

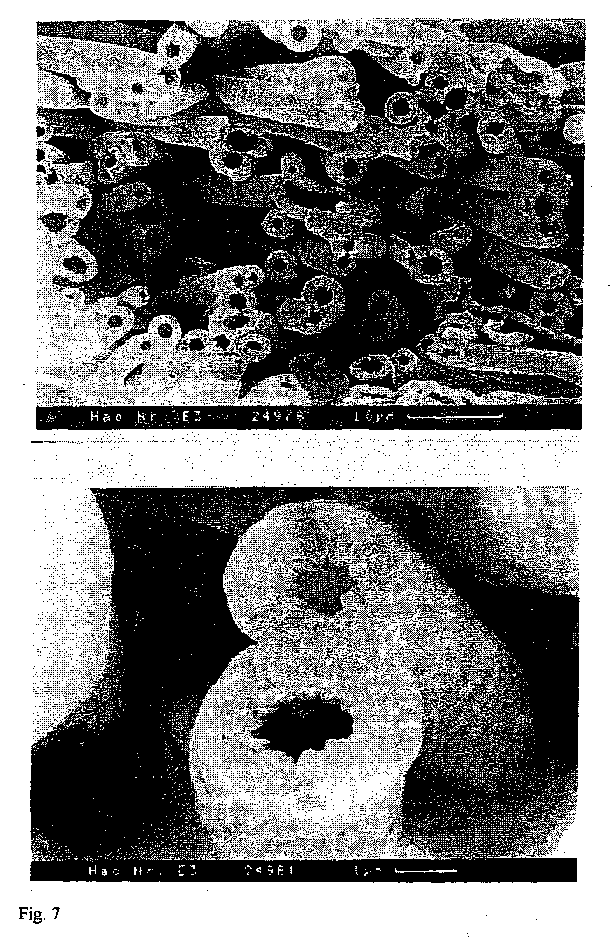

Fig. 7 Rasterelektronenmikroskopische Aufnahmen von Poly(p-xylylen)-Hohlfasern nach Entfernung der Polylactid-Templatfasern (Beispiel 3).

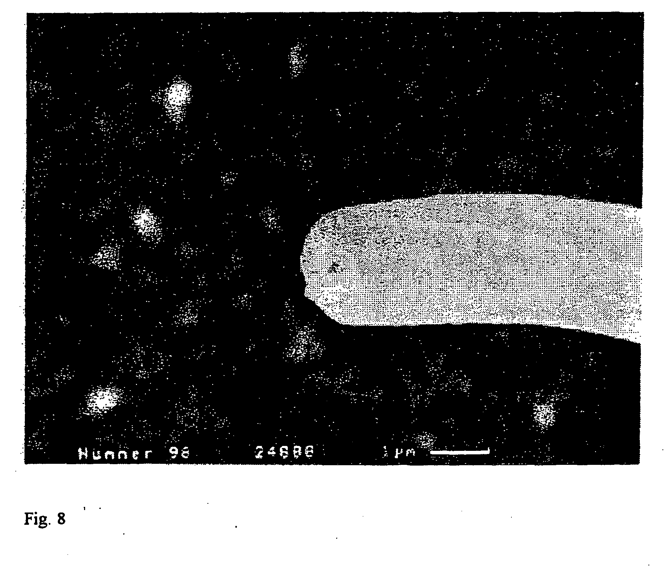

Fig.8. Rasterelektronenmikroskopische Aufnahmen von Poly(p-xylylen)-Hohlfasern nach Entfernung der Polylactid-Templatfasern (Die Polylactid-Templatfasern hergestellt durch Electrospinning aus Dichlormethan mit 0.8 % Benzyltriethylammoniumchlorid)

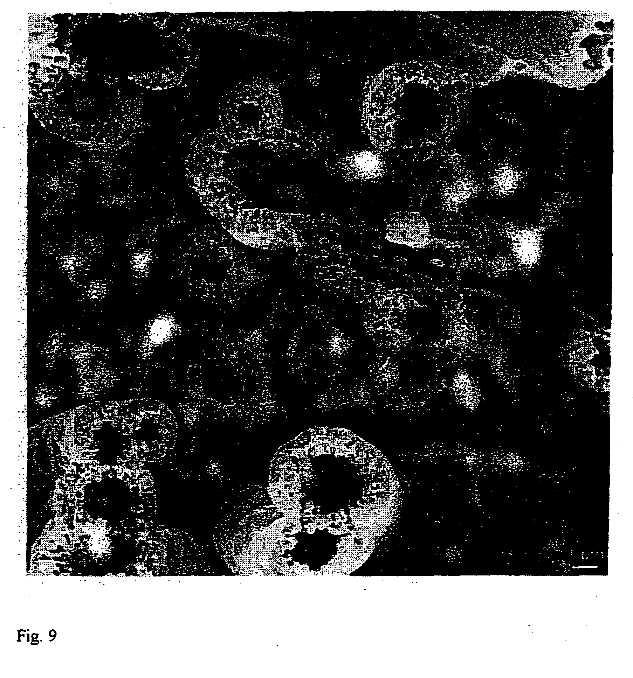

Fig.9. Rasterelektronenmikroskopische Aufnahme von Poly(p-xylylen)-Hohlfasern nach Entfernung der Polylactid-Templatfasern mit Blick auf die Topologie der Hohlfaserinnenwände.
Fig. 10. Rasterelektronenmikroskopische . Aufnahme von Polyimid-Hohlfasern nach Entfernung der Polylactid-Templatfasern (Beispiel 4)
Fig. 11. Rasterelektronenmikroskopische Aufnahme von PPX-Hohlfasern nach Entfernung der Polylactid-Templatfasern mit innerer Goldbeschichtung (Beispiel 5).
Fig. 12. Rasterelektronenmikroskopische Aufnahme von Aluminium-Hohlfasern nach Entfernung der Polytactid-Templatfasern (Beispiel 6)
Fig. 13. Infrarotspektrum der Glashohlfasern nach Degradation der der Polylactid-Templatfasern
Fig. 14. Rasterelektronenmikroskopische Abbildung von Glas-Hohlfasern

## Patentansprüche

1. Hohlfasern mit einem Innendurchmesser von 10 nm bis 50 µm und einer Außenwand, aufgebaut aus metallhaltigen anorganischen Verbindungen, Polymeren und/oder Metallen, **dadurch gekennzeichnet, daß** die Hohlfasern eine rauhe oder mikrostrukturierte Innenseite aufweisen und ein Verhältnis von Oberfläche zu Volumen zwischen 500 cm²/cm³ und 2.000.000 cm²/cm³ besitzen.

2. Hohlfasern nach Anspruch 1, **dadurch gekennzeichnet, daß** deren Innendurchmesser 10 nm bis 1 µm beträgt.

3. Hohlfasern nach einem der Ansprüche 1 oder 2, **dadurch gekennzeichnet, daß** die Außenwand der Hohlfasern aus Poly(p-xylylen), Polyacrylamid, Polyimiden, Polyestern, Polyolefinen, Polycarbonaten, Polyamiden, Polyethern, Polyphenylen, Polysilanen, Polysiloxanen, Polybenzimidazolen, Polybenzthiazolen, Polyoxazolen, Polysulfiden, Polyesteramiden, Polyarylenvinylenen, Polylactiden, Polyetherketonen, Polyurethanen, Polysulfonen, Ormoceren, Polyacrylaten, Siliconen, vollaromatischen Copolyestern, Poly-N-vinylpyrrolidon, Polyhydroxyethylmethacrylat, Polymethylmethacrylat, Polyethylenterephthalat, Polybutylentherephthalat, Polymethacrylnitril, Polyacrylnitril, Polyvinylacetat, Neopren, Buna N, Polybutadien, Polytetrafluorethen, Cellulose (modifiziert oder nichtmodifiziert), Alginaten oder Collagen, deren Homo- oder Copolymerisaten und/oder Blends aufgebaut ist.

4. Hohlfasern nach einem der Ansprüche 1 oder 2, **dadurch gekennzeichnet, daß** die Außenwand der Hohlfasern aus Metallen der Gruppen Ia, Ib, IIa, IIb, IIIa, IIIb, IVa, IVb, Vb, VIb, VIIb und/oder VIIIb des Periodensystems, jeweils als Reinmetall oder Legierung aufgebaut ist.

5. Hohlfasern nach einem der Ansprüche 1 oder 2, **dadurch gekennzeichnet, daß** die Außenwand der Hohlfasern aus Glas, Glaskeramiken, SiOₓ, Perowskit, Keramiken, Aluminiumoxiden oder Zirkonoxiden aufgebaut ist.

6. Hohlfasern nach einem der Ansprüche 1 bis 5, **dadurch gekennzeichnet, daß** die Außenwand der Hohlfasern aus mehreren Schichten aufgebaut ist.

7. Hohlfasern nach einem der Ansprüche 1 bis 6, **dadurch gekennzeichnet, daß** die Hohlfasern einen Kern aufweisen.

8. Hohlfasern nach Anspruch 7, **dadurch gekennzeichnet, daß** der Kern einen mittleren Abstand zur Außenwand von 10 bis 300 nm aufweist.

9. Hohlfasern nach einem der Ansprüche 7 oder 8, **dadurch gekennzeichnet, daß** der Kern aus anorganischen Verbindungen, keramischen Fasern. Kohlenstoffasem, Polymeren und/oder Metallen aufgebaut ist.

10. Hohlfasern nach einem der Ansprüche 1 bis 9, **gekennzeichnet durch** eine Dielektrizitätskonstante von kleiner 4.

11. Verfahren zur Herstellung von Hohlfasern aus metallhaltigen anorganischen Verbindungen, Polymere und/oder Metallen,
- bei dem eine Faser aus einem ersten abbaubaren Material mindestens eine Beschichtung aus mindestens einem weiteren Material erhält,
- anschließend das erste Material mit der Maßgabe abgebaut wird, daß die so erhaltene Hohlfaser einen Innendurchmesser von 10 nm bis 50 µm aufweist,
**dadurch gekennzeichnet, daß** die Faser aus dem ersten Material nach der Elektrospinning-Technik hergestellt wird und zwar durch Verarbeitung einer Polymerlösung mit einem leicht verdampfbaren Lösungsmittel, und
- daß die Hohlfaser ein Verhältnis von Oberfläche zu Volumen zwischen 500 cm²/cm³ und 2.000.000 cm²/cm³ besitzt und eine raue oder mikrastrukturierte Innenseite aufweist.

12. Verfahren, zur Herstellung von Hohlfasern aus metallhaltigen anorganischen Verbindungen. Polymeren und/oder Metallen,
- bei dem eine Faser eines ersten Materials nacheinander mit einem zweiten abbaubaren Material und mindestens einem weiteren Material beschichtet
- und das zweite Material mit der Maßgabe abgebaut wird, dass bezogen auf das mindestens eine weitere Material eine Hohlfaser mit einem Innendurchmesser von 10 nm bis 50 µm und einem Kern aus dem ersten Material erhalten wird,
**dadurch gekennzeichnet, daß** die Faser aus dem ersten Material nach der Elektrospinning-Technik durch Verarbeitung einer Polymerlösung mit einem leicht verdampfbaren Lösungsmittel hergestellt wird und nicht abbaubar ist und daß
- die Hohlfaser ein Verhältnis von Oberfläche zu Volumen zwischen 500 *cm²*/*cm³* und 2.000.000 cm²/cm³ besitzt sowie eine raue oder mikrostrukturierte Innenseite aufweist.

13. Verfahren nach einem der Ansprüche 11 oder 12, **dadurch gekennzeichnet, daß** das weitere Material aus anorganischen Verbindungen, Polymeren und/oder Metallen aufgebaut ist.

14. Verfahren nach einem der Ansprüche 11 bis 13, **dadurch gekennzeichnet, daß** das weitere Material aus Poly(p-xylylen), Polyacrylamid, Polyimiden, Polyestern, Polyolefinen, Polycarbonaten, Polyamiden, Polyethern, Polyphenylen, Polysilanen, Polysiloxanen, Polybenzimidazolen, Polybenzthiazolen, Polyoxazolen, Polysulfiden, Polyesteramiden, Polyarylenvinylenen, Polylactiden, Polyetherketonen, Polyurethanen, Polysulfonen, Ormoceren, Polyacrylaten, Siliconen, vollaromatischen Copolyestern, Poly-N-vinylpyrrolidon, Polyhydroxyethylmethacrylat, Polymethylmethacrylat. Polyethylenterephthalat, Polybutylentherephthalat, Polymethacrylnitril, Polyacrylnitril, Polyvinylacetat. Neopren, Buna N, Polybutadien, Polytetrafluorethen, Cellulose (modifiziert oder nichtmodifiziert), Alginaten oder Collagen, deren Homo- oder Copolymerisaten und/oder Blends besteht.

15. Verfahren nach einem der Ansprüche 11 bis 13, **dadurch gekennzeichnet, daß** das weitere Material aus Metallen der Gruppen Ia, Ib, IIa, IIb, IIIa, IIIb, IVa, IVb, Vb, VIb, VIIb und/oder VIIIb des Periodensystems, jeweils als Reinmetall oder Legierung, besteht.

16. Verfahren nach einem der Ansprüche 11 bis 13, **dadurch gekennzeichnet, daß** das weitere Material aus Metalloxiden, Glas, Glaskeramiken, SiOₓ, Perowskit, Keramiken, Aluminiumoxiden, Siliziumcarbid, Bornitrid, Kohlenstoff oder Zirkoniumoxiden besteht.

17. Verfahren nach einem der Ansprüche 11 bis 14, **dadurch gekennzeichnet, daß** das weitere Material durch Polymerisation, Polykondensation oder Polyaddition eines oder mehrerer Monomeren erhalten wird.

18. Verfahren nach Anspruch 17, **dadurch gekennzeichnet, daß** das weitere Material durch Homo- oder Copolymerisation, -addition oder -kondensation von Methacrylat, Styrol, Styrolsulfonat, 1,6-Hexamethylendiisocyanat (HDI), 4.4'-Methylenbiscyclohexyldiisocyanat (HMDI), 4,4'-Methylenbis-(benzyldiisocyanat) (MDI), 1,4-Butandiol, Ethylendiamin, Ethylen, Styrol, Butadien, Buten-1, Buten-2, Vinylalkohol, Acrylnitril, Methylmethacrylat, Vinylchlorid, fluorierten Ethylenen und/oder Therephthalat erhalten wird.

19. Verfahren nach einem der Ansprüche 11 bis 18, **dadurch gekennzeichnet, daß** der Abbau des abbaubaren Materials thermisch, chemisch, biologisch, strahleninduziert, photochemisch, durch Plasma, Ultraschall oder Extraktion mit einem Lösungsmittel verfolgt.

20. Verwendung der Hohlfasern gemäß einem der Ansprüche 1 bis 10 als Separationsmedium oder Speichermedium für Gase, Flüssigkeiten oder Partikelsuspensionen.

21. Verwendung der Hohlfasern gemäß einem der Ansprüche 1 bis 10 in der Dialyse, als künstliche Lunge, Proteinspeicher, Controlled Release oder Drug Delivery System oder in medizinischen Separationstechniken.

22. Verwendung der Hohlfasern gemäß einem der Ansprüche 1 bis 10 in der Zelltechnologie zur Entnahme von Stoffwechselmetaboliten, Enzymen und anderen Komponenten des Zytoplasmas zu ihrer Separierung und/oder Gewinnung von Biopharmaka.

23. Verwendung der Hohlfasern gemäß einem der Ansprüche 1 bis 10 als Sensorbestandteil, als Mikroreaktor oder in der Mikroelektronik als Draht, Kabel oder Kapazität.

24. Verwendung der Hohlfasern gemäß einem der Ansprüche 1 bis 10 in der Superleichtbautechnik, als Verbundwerkstoff, als Füllstoff, als mechanische Verstärkung, als Wärmeisolator oder in der Bekleidungsindustrie.

25. Verwendung der Hohlfasern gemäß einem der Ansprüche 1 bis 10 in Brennstoffzellen, Batterien oder in elektrochemischen Reaktionen.

26. Verwendung der Hohlfasern gemäß einem der Ansprüche 1 bis 10 in der Kapillarelektrophorese, in der Rastersondenmikroskopie oder in katalytischen Systemen.

27. Verwendung der Hohlfasern gemäß einem der Ansprüche 1 bis 10 als Dielektrikum.

28. Verwendung der Hohlfasern gemäß einem der Ansprüche 1 bis 10 als Interlayer Dielektrikum in der Chipherstellung.

## Claims

1. Hollow fibres having an internal diameter from 10 nm to 50 µm and an outer wall comprising metal-containing inorganic compounds, polymers and/or metals, **wherein** the hollow fibres comprise a rough or micro-structured inside and possess a ratio between surface and volume from 500 cm²/cm³ to 2,000,000 cm²/cm³.

2. Hollow fibres according to claim 1, **wherein** the internal diameter is 10 nm to 1 µm.

3. Hollow fibres according to one of the claims 1 or 2, **wherein** the outer wall of the hollow fibres comprises poly(p-xylylene), polyacrylamide, polyimides, polyesters, polyolefins, polycarbonates, polyamides, polyethers, polyphenylene, polysilanes, polysiloxanes, polybenzimidazoles, polybenzothiazoles, polyoxazoles, polysulfides, polyester amides, polyarylenevinylenes, polylactides, polyether ketones, polyurethanes, polysulfones, ormocers, polyacrylates, silicones, fully aromatic copolyesters, poly-N-vinylpyrrolidone, polyhydroxyethyl methacrylate, polymethyl methacrylate, polyethylene terephthalate, polybutylene terephthalate, polymethacrylonitrile, polyacrylonitrile, polyvinyl acetate, neoprene, Buna N, polybutadiene, polytetrafluoroethene, cellulose (modified or unmodified), alginates or collagen, their homopolymerisates or copolymerisates and/or blends thereof.

4. Hollow fibres according to one of the claims 1 or 2, **wherein** the outer wall of the hollow fibres comprises metals of the groups Ia, Ib, IIa, IIb, IIIa, IIIb, IVa, IVb, Vb, VIb, VIIb and/or VIIIb of the Periodic Table, in the form of pure metal or alloy, respectively.

5. Hollow fibres according to one of the claims 1 or 2, **wherein** the outer wall of the hollow fibres comprises glass, glass-ceramics, SiOₓ, perovskite, ceramics, aluminium oxides or zirconium oxides.

6. Hollow fibres according to one of the claims 1 to 5, **wherein** the outer wall of the hollow fibres comprises several layers.

7. Hollow fibres according to one of the claims 1 to 6, **wherein** the hollow fibres comprise a core.

8. Hollow fibres according to claim 7, **wherein** the core comprises an average distance to the outer wall of 10 to 300 nm.

9. Hollow fibres according to one of the claims 7 or 8, **wherein** the core comprises inorganic compounds, ceramic fibres, carbon fibres, polymers and/or metals.

10. Hollow fibres according to one of the claims 1 to 9, **wherein** said fibres have a dielectric constant of less than 4.

11. Method for the production of hollow fibres from metal-containing inorganic compounds, polymers and/or metals,
- wherein a fibre of a first degradable material obtains at least one coating from at least one further material,
- subsequently the first material is degraded with the aim that the hollow fibre obtained in this way comprises an inner diameter of 10 nm to 50 µm,
**wherein** the fibre of the first material is produced according to the electrospinning technique, namely by processing a polymer solution with a highly volatile solvent, and
- the hollow fibre possesses a ratio between surface and volume from 500 cm²/cm³ to 2,000,000 cm²/cm³ and comprises a rough micro-structured inside.

12. Method for the production of hollow fibres from metal-containing inorganic compounds, polymers and/or metals,
- wherein one fibre of a first material is coated successively with a second degradable material and at least one further material
- and the second material is degraded with the aim that, compared to the at least one further material, one hollow fibre is obtained with an internal diameter of 10 nm to 50 µm and a core of the first material,
**wherein** the fibre of the first material is produced according to the electrospinning technique by processing a polymer solution with a very volatile solvent and is not degradable and
- the hollow fibre possesses a ratio between surface and volume from 500 cm²/cm³ to 2,000,000 cm²/cm³ and comprises a rough micro-structured inside.

13. Hollow fibres according to one of the claims 11 or 12, **wherein** the further material comprises inorganic compounds, polymers and/or metals.

14. Hollow fibres according to one of the claims 11 to 13, **wherein** the further material comprises poly(p-xylylene), polyacrylamide, polyimides, polyesters, polyolefins, polycarbonates, polyamides, polyethers, polyphenylene, polysilanes, polysiloxanes, polybenzimidazoles, polybenzothiazoles, polyoxazoles, polysulfides, polyester amides, polyarylenevinylenes, polylactides, polyether ketones, polyurethanes, polysulfones, ormocers, polyacrylates, silicones, fully aromatic copolyesters, poly-N-vinylpyrrolidone, polyhydroxyethyl methacrylate, polymethyl methacrylate, polyethylene terephthalate, polybutylene terephthalate, polymethacrylonitrile, polyacrylonitrile, polyvinyl acetate, neoprene, Buna N, polybutadiene, polytetrafluoroethene, cellulose (modified or unmodified), alginates or collagen, their homopolymerisates or copolymerisates and/or blends thereof.

15. Hollow fibres according to one of the claims 11 to 13, **wherein** the further material comprises metals of the groups Ia, Ib, IIa, IIb, IIIa, IIIb, IVa, IVb, Vb, VIb, VIIb and/or VIIIb of the Periodic Table, in the form of pure metal or alloy respectively.

16. Method according to one of the claims 11 to 13, **wherein** the further material comprises metal oxides, glass, glass-ceramics, SiOₓ, perovskite, ceramics, aluminium oxides, silicon carbide, bomitride, carbon or zirconium oxides.

17. Method according to one of the claims 11 to 14, **wherein** the further material is obtained by polymerisation, polycondensation or polyaddition of one or several monomers.

18. Method according to claim 17, **wherein** the further material is obtained by homo- or copolymerisation, by polyaddition or polycondensation of methacrylate, styrene, styrene sulfonate, 1,6-hexamethylene diisocyanate (HDI), 4,4'-methylenebiscyclohexyl diisocyanate (HMDI), 4,4'-methylenebis(benzyl diisocyanate) (MDI), 1,4-butanediol, ethylenediamine, ethylene, styrene, butadiene, 1-butene, 2-butene, vinyl alcohol, acrylonitrile, methyl methacrylate, vinyl chloride, fluorinated ethylenes and/or terephthalate.

19. Method according to one of the claims 11 to 18, **wherein** the degradation of the degradable material is carried out thermally, chemically, biologically, radiation-induced, photochemically, by means of plasma, ultrasound or extraction with a solvent.

20. Use of the hollow fibres according to one of the claims 1 to 10 as a separation medium or a storage medium for gases, liquids or particle suspensions.

21. Use of the hollow fibres according to one of the claims 1 to 10 in dialysis, as artificial lungs, protein store, controlled release or drug delivery system or in medical separation techniques.

22. Use of the hollow fibres according to one of the claims 1 to 10 in cell technology to extract metabolites, enzymes and other components of the cytoplasma for their separation and/or production of biopharmaceuticals.

23. Use of the hollow fibres according to one of the claims 1 to 10 as sensor constituent, microreactor or in microelectronics as wire, cable or capacitor.

24. Use of the hollow fibres according to one of claims 1 to 10 in the super-lightweight construction as composite material, filler, mechanical reinforcement, heat insulator or in the clothing industry.

25. Use of the hollow fibres according to one of the claims 1 to 10 in fuel cells, batteries or electrochemical reactions.

26. Use of the hollow fibres according to one of the claims 1 to 10 in the capillary electrophoresis, in scanning probe microscopy or in catalytic systems.

27. Use of the hollow fibres according to one of the claims 1 to 10 as dielectric material.

28. Use of the hollow fibres according to one of the claims 1 to 10 as dielectric interlayer in the chip production.

## Revendications

1. Fibres creuses avec un diamètre intérieur de 10 nm à 50 µm et une paroi extérieure, réalisée à partir de composés anorganiques contenant du métal, de polymères et/ou de métaux, **caractérisées en ce que** les fibres creuses présentent une face interne rugueuse ou micro-structurée et **en ce qu'**elles possèdent un rapport de la surface au volume se situant entre 500 cm²/cm³ et 2.000.000 cm²/cm³*.*

2. Fibres creuses selon la revendication 1, **caractérisées en ce que** le diamètre intérieur est compris entre 10 nm et 1 µm.

3. Fibres creuses selon une des revendications 1 ou 2, **caractérisées en ce que** la paroi extérieure des fibres creuses est réalisée à partir de poly(p-xylylène), de polyacrylamide, de polyimides, de polyesters, de polyoléfines, de polycarbonates, de polyamides, de polyéthers, de polyphénylène, de polysilanes, de polysiloxanes, de polybenzimidazoles, de polybenzothiazoles, de polyoxazoles, de polysulfides, de polyesteramides, de polyarylène-vinylènes, de polylactides, de polyéthercétones, de polyuréthanes, de polysulfones, d'ormocers, de polyacrylates, de silicones, de copolyesters entièrement aromatiques, de poly-N-vinyle-pyrrolidone, de polyhydroxyéthylméthacrylate, de polyméthylméthacrylate, de polyéthylène téréphthalate, de polybutylène téréphthalate, de polyméthacrylonitrile, de polyacrylonitrile, de polyvinylacétate, de néoprène, de Buna N, de polybutadiène, de polytétrafluoroéthène, de cellulose (modifiée ou non-modifiée), d'alginates ou de collagène, de leurs homopolymérisats ou de leurs copolymérisats et/ou de leurs mélanges.

4. Fibres creuses selon une des revendications 1 ou 2, **caractérisées en ce que** la paroi extérieure des fibres creuses est réalisée à partir de métaux des groupes Ia, Ib, IIa, IIb, IIIa, IIIb, IVa, IVb, Vb, VIb, VIIb et/ou VIIIb du tableau périodique, respectivement comme métal pur ou alliage.

5. Fibres creuses selon une des revendications 1 ou 2, **caractérisées en ce que** la paroi extérieure des fibres creuses est réalisée à partir de verre, de vitrocéramiques, de SiOₓ, de pérowskite, de céramiques, d'oxydes d'aluminium ou d'oxydes de zirconium.

6. Fibres creuses selon une des revendications 1 à 5, **caractérisées en ce que** la paroi extérieure des fibres creuses est composée de plusieurs couches.

7. Fibres creuses selon une des revendications 1 à 6, **caractérisées en ce que** les fibres creuses présentent un noyau.

8. Fibres creuses selon la revendication 7, **caractérisées en ce que** le noyau présente une distance moyenne à la paroi extérieure de 10 à 300 nm.

9. Fibres creuses selon une des revendications 7 ou 8, **caractérisées en ce que** le noyau est réalisée à partir de composés anorganiques, de fibres céramiques, de fibres de carbone, de polymères et/ou de métaux.

10. Fibres creuses selon une des revendications 1 à 9, **caractérisées par** une constante diélectrique inférieure à 4.

11. Procédé de fabrication de fibres creuses à partir de composés anorganiques contenant du métal, de polymères et/ou de métaux,
- dans lequel une fibre composée d'un premier matériau dégradable reçoit au moins une couche d'au moins un matériau supplémentaire,
- dans lequel ensuite le premier matériau est dégradé de telle sorte que la fibre creuse ainsi obtenue présente un diamètre intérieur de 10 nm à 50 µm,
**caractérisé en ce que** la fibre composée du premier matériau est fabriquée d'après la technique de l'électrospinning, à savoir par traitement d'une solution polymère avec un solvant volatil et
- **en ce que** la fibre creuse possède un rapport de la surface au volume se situant entre 500 cm²/cm³ et 2.000.000 cm²/cm³ et présente une face interne rugueuse ou micro-structurée.

12. Procédé de fabrication de fibres creuses à partir de composés anorganiques contenant du métal, de polymères et/ou de métaux,
- dans lequel une fibre d'un premier matériau est revêtue l'un après l'autre d'un deuxième matériau dégradable et d'au moins un matériau supplémentaire et
- dans lequel le deuxième matériau est dégradé de telle sorte que, en référence au matériau supplémentaire au nombre minimum de un, une fibre creuse avec un diamètre intérieur de 10 nm à 50 µm et un noyau composé du premier matériau est obtenue,
**caractérisé en ce que** la fibre composée du premier matériau est fabriquée d'après la technique de l'électrospinning par traitement d'une solution polymère avec un solvant volatil et **en ce qu'**elle n'est pas dégradable et
- que la fibre creuse possède un rapport de la surface au volume se situant entre 500 cm²/cm³ et 2.000.000 cm²/cm³ et présente une face interne rugueuse ou micro-structurée.

13. Procédé selon une des revendications 11 ou 12, **caractérisées en ce que** le matériau supplémentaire est réalisé à partir de composés inorganiques, de polymères et/ou de métaux.

14. Fibres creuses selon une des revendications 11 ou 13, **caractérisées en ce que** matériau supplémentaire est réalisé à partir de poly(p-xylylène), de polyacrylamide, de polyimides, de polyesters, de polyoléfines, de polycarbonates, de polyamides, de polyéthers, de polyphénylène, de polysilanes, de polysiloxanes, de polybenzimidazoles, de polybenzothiazoles, de polyoxazoles, de polysulfides, de polyesteramides, de polyarylène-vinylènes, de polylactides, de polyéthercétones, de polyuréthanes, de polysulfones, d'ormocers, de polyacrylates, de silicones, de copolyesters entièrement aromatiques, de poly-N-vinyle-pyrrolidone, de polyhydroxyéthylméthacrylate, de polyméthylméthacrylate, de polyéthylène téréphthalate, de polybutylène téréphthalate, de polyméthacrylonitrile, de polyacrylonitrile, de polyvinylacétate, de néoprène, de Buna N, de polybutadiène, de polytétrafluoroéthène, de cellulose (modifiée ou non-modifiée), d'alginates ou de collagène, de leurs homopolymérisats ou de leurs copolymérisats et/ou de leurs mélanges.

15. Procédé selon une des revendications 11 ou 13, **caractérisées en ce que** le matériau supplémentaire est composé à partir de métaux des groupes Ia, Ib, IIa, IIb, IIIa, IIIb, IVa, IVb, Vb, VIb, VIIb et/ou VIIIb du tableau périodique, respectivement comme métal pur ou alliage.

16. Procédé selon une des revendications 11 à 13, **caractérisé en ce que** le matériau supplémentaire est composé à partir d'oxydes métalliques, de verre, de vitrocéramiques, de SiOₓ, de pérowskite, de céramiques, d'oxydes d'aluminium, de carbure de silicium, de nitrure de bore, de carbone ou d'oxydes de zirconium.

17. Procédé selon une des revendications 11 à 14, **caractérisé en ce que** le matériau supplémentaire est obtenu par polymérisation, polycondensation ou polyaddition d'un ou plusieurs monomères.

18. Procédé selon la revendication 17, **caractérisé en ce que** le matériau supplémentaire est obtenu par homo- ou copolymérisation, par polyaddition ou polycondensation de méthacrylate, de styrène, de sulfonate de styrène, de 1,6-hexaméthylène diisocyanate (HDI), de 4,4'-méthylène biscyclohexyle diisocyanate (HMDI), de 4,4'-méthylène-bis-(benzyl diisocyanate) (MDI), de 1,4-butandiole, d'éthylènediamine, d'éthylène, de styrène, de butadiène, de butène-1, de butène-2, de vinylalcool, d'acrylonitrile, de méthylméthacrylate, de chlorure de vinyle, d'éthylènes fluorés et/ou de téréphthalate.

19. Procédé selon une des revendications 11 à 18, **caractérisé en ce que** la dégradation du matériau dégradable se fait suivant un procédé thermique, chimique, biologique, induit par rayons, photochimique, par plasma, ultrason ou extraction avec un solvant.

20. Utilisation des fibres creuses selon une des revendications 1 à 10 comme milieu de séparation ou milieu d'accumulation pour les gaz, les liquides ou les particules en suspension.

21. Utilisation des fibres creuses selon une des revendications 1 à 10 dans la dialyse, comme poumon artificiel, comme réservoir de protéines, comme système d'apport ou de libération contrôlée des médicaments ou dans des techniques médicales de séparation.

22. Utilisation des fibres creuses selon une des revendications 1 à 10 dans la technologie cellulaire pour le prélèvement de produits métaboliques, d'enzymes et d'autres composantes du cytoplasme en vue de leur séparation et/ou de l'obtention de produits pharmaceutiques biologiques.

23. Utilisation des fibres creuses selon une des revendications 1 à 10 comme composant de capteur, comme microréacteur ou dans la microélectronique comme fil, câble ou capacité.

24. Utilisation des fibres creuses selon une des revendications 1 à 10 dans la technique de construction superlégère, comme matériau composite, comme matière de remplissage, comme renforcement mécanique, comme isolateur de chaleur ou dans l'industrie du vêtement.

25. Utilisation des fibres creuses selon une des revendications 1 à 10 dans des cellules de combustible, dans des piles ou dans des réactions électrochimiques.

26. Utilisation des fibres creuses selon une des revendications 1 à 10 dans l'électrophorèse capillaire, dans la microscopie à champ proche ou dans des systèmes catalytiques.

27. Utilisation des fibres creuses selon une des revendications 1 à 10 comme diélectrique.

28. Utilisation des fibres creuses selon une des revendications 1 à 10 comme diélectrique inter-couche dans la fabrication de puces.
